# FASCICULE DE BREVET EUROPEEN

(11) **EP 1 177 465 B1**
(45) Date de publication et mention de la délivrance du brevet: **05.04.2006**
(21) Numéro de dépôt: 00925356.8
(22) Date de dépôt: 28.04.2000
(51) Int. Cl.: G02B 1/04, G02C 7/02, B29D 11/00

(54) **LENTILLE OPHTALMIQUE COMPOSITE ET PROCEDE D'OBTENTION D'UNE TELLE LENTILLE**
OPHTHALMISCHE KOMPOSITLINSE UND VERFAHREN ZUR HERSTELLUNG
COMPOSITE OPHTHALMIC LENS AND METHOD FOR OBTAINING SAME

(30) Priorité: 29.04.1999 FR 9905466
(43) Date de publication de la demande: 06.02.2002
(73) Titulaire: ESSILOR INTERNATIONAL COMPAGNIE GENERALE D'OPTIQUE, 94227 Charenton cédex (FR)
(72) Inventeur: JIANG, Peiqi, Kawasaki, Kanagawa (JP); CABEZA, Stéphane, Essilor Japan, Kawasaki-shi, Kanagawa-ken 213 (JP); MENDUNI, Gilbert, Tokyo (JP)
(74) Mandataire: Catherine, Alain
(86) Numéro de dépôt international: PCT/FR2000/001160
(87) Numéro de publication internationale: WO 2000/067050

(56) Documents cités:
- EP-A- 0 726 138
- EP-A- 0 801 320
- WO-A-97/33742
- WO-A-98/03894
- FR-A- 2 689 654
- US-A- 5 512 371

## Description

La présente invention se rapporte au domaine des lentilles ophtalmiques composites, en particulier en matériaux polymères organiques.

Les lentilles ophtalmiques, et spécialement les verres de lunette, sont des lentilles optiques utilisées pour la modification ou la correction de la vue de patients, en particulier ceux souffrant de défauts de la vision comme les amétropies ou la presbytie.

Les propriétés que doivent posséder de telles lentilles sont nombreuses.

Elles doivent présenter des surfaces optiques de grande qualité, posséder un haut degré de transparence et entraîner un minimum d'aberrations optiques ou chromatiques tout en restant minces et légères. Les lentilles doivent être également résistantes à l'abrasion, aux chocs, à des contraintes statiques et être aptes à la coloration à la demande du client.

Les lentilles ophtalmiques composites, comportant plusieurs couches en matériau organique (et éventuellement minéral) sont connues depuis longtemps.

Elles présentent l'avantage de bénéficier des propriétés intrinsèques propres à chacun des matériaux utilisés.

Par ailleurs, et de manière générale, leur procédé d'obtention est flexible et est particulièrement intéressant pour obtenir des lentilles ophtalmiques combinant plusieurs surfaces optiques de correction de la vue.

En particulier, pour leur obtention, on peut utiliser une préforme possédant une certaine puissance optique et venir surmouler sur cette préforme une couche de matière dont la géométrie de la surface va modifier la correction initiale apportée par la préforme.

Cette technique est adaptée pour réaliser, par exemple, une lentille comportant une zone à puissance multifocale en face avant, destinée à corriger la presbytie et, en face arrière, une surface torique, destinée à corriger un astigmatisme.

Dans ce cas, on vient surmouler une couche en face avant d'une préforme de lentille comportant une surface arrière torique. La couche est moulée de telle sorte qu'elle confère une correction de puissance multifocale à la lentille finale.

On obtient ainsi l'article final souhaité sans avoir à effectuer d'opération de surfaçage.

Ce procédé est décrit dans l'art antérieur, avec de nombreuses variantes.

Le brevet US-3 248 460 décrit un procédé d'obtention d'une lentille composite bifocale en matière organique, à partir d'une préforme ou lentille de base, possédant déjà une certaine puissance optique.

De la matière à mouler est placée dans un moule dont l'une des parties est constituée par cette lentille de base.

On polymérise la matière à mouler de façon à obtenir, par ajout de matière supplémentaire sur la lentille de base, une lentille composite de puissance supérieure à la lentille de base.

Ce brevet ne donne que peu de détails sur le choix des matériaux à mettre en oeuvre.

Le brevet US-4 190 621 décrit un procédé d'obtention de lentilles toriques et bifocales.

Ce procédé consiste à mouler une fine épaisseur de matière sur une préforme unifocale, torique.

Le moule utilisé a le même rayon de courbure que la préforme et une partie en creux dont la géométrie est complémentaire de la géométrie de la zone bifocale souhaitée sur la lentille composite finale. Le moulage est effectué en face avant.

En pratique, la matière à mouler décrite est constituée essentiellement d'un monomère de type diallylcarbonate de diéthylène glycol, connu sous la dénomination commerciale CR39®.

Le brevet US-4 873 029 décrit des lentilles composites avec une couche colorée.

Les lentilles sont également obtenues à partir de CR39®.

Les brevets US-5 147 585 et 5 178 800 décrivent des procédés d'obtention de lentilles ophtalmiques composites à partir de préformes possédant déjà une première puissance correctrice initiale.

Les matériaux utilisés sont les polymères obtenus à partir de CR39® ou de HIRI® (monomère allylique conduisant à un polymère d'indice de réfraction de l'ordre de 1,55).

D'autres matériaux tels que le polycarbonate ou des polymères obtenus, entre autres, à partir de dérivés styréniques sont cités.

La demande de brevet WO-93/21010 décrit une lentille composite comprenant à l'avant une préforme optique d'au moins 100 micromètres d'épaisseur et dont la dureté est au moins celle d'un matériau CR39® nu et une couche polymérique à l'arrière dont la résistance au choc est au moins celle d'un matériau CR39® nu.

Le procédé d'obtention de la lentille composite recommandé est le surmoulage de la couche résistant au choc en face arrière de la préforme.

Le brevet US-5 512 371 décrit une lentille composite comprenant une préforme de qualité optique et une partie durcie en matériau organique, adhérente à cette préforme ayant une résistance à l'abrasion plus élevée que la préforme et une plus faible aberration chromatique.

Le brevet décrit plus particulièrement le cas d'une préforme en polycarbonate sur laquelle on vient déposer en face avant un matériau du type CR39®.

La demande de brevet WO-98/03894 décrit une lentille ophtalmique constituée par la combinaison de deux éléments optiques de puissances opposées conduisant à une lentille à nombre d'Abbe élevé. Le matériau constituant l'élément optique de la partie avant peut être un polymère d'indice élevé obtenu à partir d'un monomère dérivé du styrène ou du divinylbenzène.

Les lentilles composites décrites dans l'art antérieur présentent un certain nombre d'inconvénients importants :

Les lentilles composites sont généralement plus épaisses que les lentilles obtenues à partir d'un seul matériau de base, alors que les porteurs recherchent des lentilles les plus minces possible pour des raisons esthétiques.

Généralement, les matériaux utilisés pour les différentes couches constituant la lentille composite possèdent des indices de réfraction différents, ce qui peut entraîner des aberrations optiques.

Généralement encore, le matériau de surmoulage possède un taux de retrait important lors de la polymérisation, après sa mise en contact avec la préforme, ce qui entraîne des tensions internes au sein de la lentille composite, qui peuvent fragiliser celle-ci.

En outre, comme la préforme est mince, ces tensions peuvent également entraîner des déformations de la surface optique de celle-ci, déformations non maîtrisables et auxquelles il n'est pas possible de remédier.

La présente invention a pour objet de fournir une lentille ophtalmique composite et un procédé d'obtention de celle-ci, qui résolvent les problèmes ci-dessus.

La lentille ophtalmique composite selon l'invention comprend une première et une deuxième couches adjacentes définissant entre elles une interface :
- la première couche, d'une épaisseur d'au moins 200 micromètres, en un premier matériau polymère d'indice de réfraction d'au moins 1,60, de préférence supérieur ou égal à 1,65 forme une partie avant de ladite lentille et a une face avant constituant une surface optique avant S1,
- la seconde couche, d'une épaisseur d'au moins 200 micromètres, en un second matériau polymère forme une partie arrière de ladite lentille et a une face arrière constituant une surface optique arrière S2, et
- l'interface entre ces deux couches constitue une surface optique S3 et est parallèle à la face arrière de la seconde couche.

Préférentiellement, la surface optique avant S1 est une surface multifocale, c'est-à-dire au moins bifocale, ou progressive alors que la surface optique arrière S2 est sphérique ou torique.

Dans le cadre de la présente demande, on distingue les parties avant et arrière et les faces avant et arrière de la lentille composite, ou d'une des couches constituant la lentille composite, en se basant par rapport à l'oeil du porteur auquel est destinée la lentille, dans les conditions normales d'utilisation de cette lentille.

La partie avant ou la face avant de la lentille ou d'une couche incluse dans cette lentille est la partie, la face ou la couche la plus éloignée de l'oeil du porteur. La partie arrière, la face arrière ou la couche arrière est la partie, la couche ou la face la plus proche de l'oeil du porteur.

Par surface optique, on entend une surface de qualité optique.

Par surface progressive, on entend une surface qui comprend au moins une zone conférant une correction de puissance progressive.

Globalement, la lentille composite selon l'invention comporte une partie avant constituée par une première couche en un matériau d'indice très élevé, qui apporte, par l'intermédiaire de ses deux surfaces optiques S1 et S3. l'ensemble des capacités correctrices de la lentille.

La deuxième couche formant la partie arrière de la lentille composite constitue une lentille ou élément de lentille dit "plan", c'est-à-dire que les deux faces qui la délimitent, constituant les deux surfaces optiques S2 et S3, sont des faces parallèles et cette deuxième couche n'apporte donc globalement aucune modification notable à la correction apportée par la première couche d'indice de réfraction très élevé.

Il est donc possible d'utiliser pour le matériau constituant la seconde couche un matériau d'indice de réfraction notablement plus faible que celui de la première couche sans modifier notablement la fonction optique de la première couche (c'est-à-dire les caractéristiques de puissance optique et d'aberrations optiques. Par aberrations optiques, on englobe les défauts de puissance, les aberrations chromatiques et l'astigmatisme).

Par ailleurs, utiliser un matériau d'indice élevé permet de diminuer l'épaisseur de la couche formant la partie avant de la lentille, et donc par voie de conséquence, celle de la lentille finale.

Préférentiellement, la lentille ophtalmique composite selon l'invention est telle que la deuxième couche formant la partie arrière de la lentille est une préforme, sur la face avant de laquelle la première couche du premier matériau polymère a été durcie.

Dans ce mode préféré de réalisation, on voit que c'est la face avant de la préforme qui détermine la géométrie de la surface optique S3, c'est-à-dire également la surface optique arrière de la première couche d'indice de réfraction élevé et donc la puissance optique de la lentille composite finale.

Comme indiqué précédemment, la lentille selon l'invention comporte une partie avant constituée d'un matériau d'indice de réfraction particulièrement élevé d'au moins 1,60, de préférence supérieur ou égal à 1,65, et mieux supérieur à 1,67 et mieux encore égal ou supérieur à 1,7.

Les matériaux préférentiels sont des matériaux renfermant du soufre, par exemple des matériaux à base de polymères d'épisulfures tels que décrits dans les demandes de brevets EP-761665 et EP-785194 ou des matériaux à base de polythiouréthannes ou encore obtenus par réaction entre des isothiocyanates et des polythiols.

L'intérêt des matériaux à base d'épisulfures est leur indice très élevé associé à de bonnes qualités de résistance à l'abrasion.

Les groupements épisulfures sont des groupements renfermant l'unité cyclique :

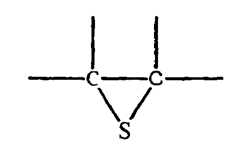

Des épisulfures préférés sont des composés qui comportent deux ou plusieurs groupes fonctionnels répondant à la formule : 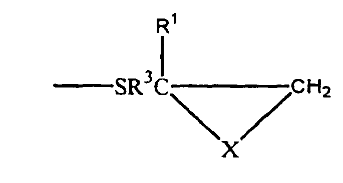 où X représente S ou O, le taux numérique de S, en moyenne, étant de 50% ou plus par rapport au nombre total de S et O constituant le cycle à trois chaînons, et R¹ et R³ sont tels que définis ci-après.

De préférence, X représente un atome de soufre.

Les épisulfures préférés sont les diépisulfures de formule : 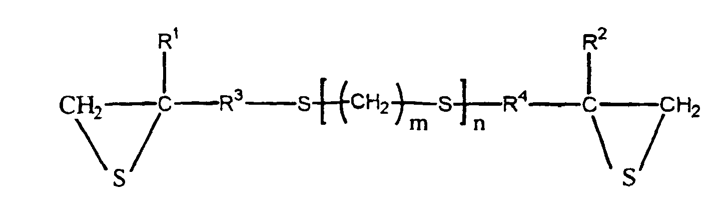 dans laquelle, R¹ et R² sont, indépendamment l'un de l'autre, H, un groupe alkyle, aryle, alcoxy, aryloxy, alkylthio ou arylthio ; R³ et R⁴ sont, indépendamment l'un de l'autre,

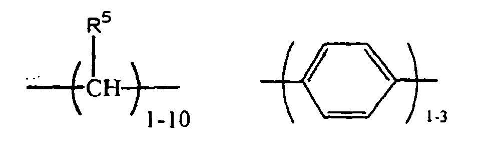

R⁵ représente H, un groupe alkyle, aryle, alcoxy, aryloxy, alkylthio ou arylthio et, n est un entier de 0 à 4 et m est un entier de 0 à 6.

Une classe préférée de diépisulfures comprend les diépisulfures de formule : 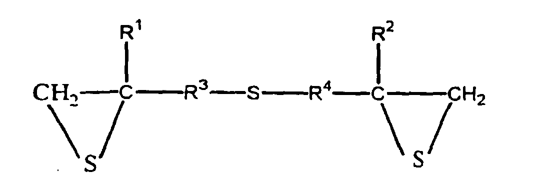 dans laquelle R¹, R², R³ et R⁴ sont définis comme ci-dessus.

Une autre classe préférée de diépisulfures comprend les diépisulfures de formule : 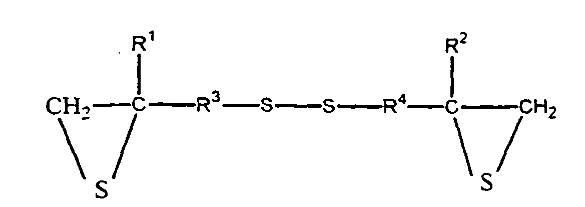 dans laquelle R¹, R², R³ et R⁴ sont définis comme ci-dessus.

Les groupes alkyles et alcoxy représentés par R¹, R², R³ et R⁴ sont de préférence des groupes en C₁-C₆ et mieux en C₁-C₄ tels que les groupes méthyle, éthyle, propyle, butyle, méthoxy, éthoxy, propoxy et butoxy.

Les diépisulfures préférés sont :

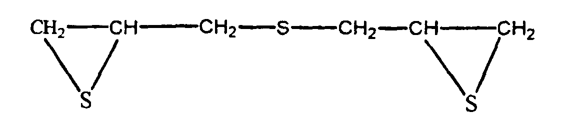

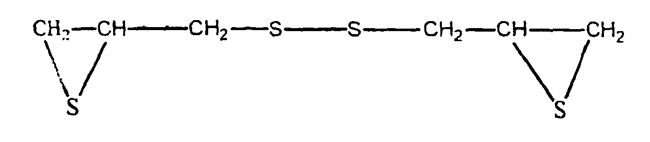

Le second matériau constituant la deuxième couche formant la partie arrière de la lentille peut être choisi parmi les matériaux à base de polymère (méth)allylique, (méth)acrylique, thio(méth)acryliques, les poly(thio)uréthannes et les polycarbonates thermoplastiques.

De préférence, le second matériau possède un indice de réfraction supérieur ou égal à 1,54.

De préférence, le second matériau constituant la deuxième couche a un indice de réfraction inférieur au premier matériau formant la première couche. La différence d'indice de réfraction entre le premier matériau constituant la première couche et le second matériau constituant la seconde couche est généralement d'au moins 0,05 et mieux 0,10.

Les matériaux préférés sont les polycarbonates, les polythiouréthannes, et les polyallyliques.

Parmi ceux-ci, sont préférés :
- les matériaux obtenus par polymérisation de monomères dérivés du bis allyl carbonate de diéthylène glycol,
- les polycarbonates thermoplastiques à motif bisphénol-A,
- les polythiouréthannes.

Le second matériau est préférentiellement choisi de telle sorte qu'il améliore les propriétés mécaniques globales de la lentille composite finale, en particulier la résistance aux chocs et également, si cela est souhaité, son aptitude à la coloration.

Les épaisseurs au centre des deux couches principales constituant la lentille composite varient généralement de 0,2 à 10 mm.

De préférence, la première couche formant la partie avant de la lentille composite a une épaisseur au centre de 1 à 10 mm dans le cas d'une lentille de puissance optique positive, et de 0,2 à 2 mm dans le cas d'une lentille de puissance optique négative.

Préférentiellement, la deuxième couche formant la partie arrière de la lentille composite a une épaisseur au centre de 0,2 à 1 mm.

Préférentiellement, l'une au moins des deux faces constituant les surfaces optiques S1, S2 de la lentille ophtalmique composite comporte un revêtement dur anti-abrasion.

On peut utiliser pour former cette couche de revêtement dur anti-abrasion toute composition classiquement utilisée à cette fin dans l'art antérieur.

Parmi les compositions pour revêtement dur anti-abrasion préférées, on peut citer les compositions à base d'hydrolysats d'alcoxysilanes, en particulier d'hydrolysats d'époxysilanes telles que celles décrites dans le brevet français FR-9 302 649 et le brevet US-4 211 823.

Une composition pour revêtement dur anti-abrasion préférée comprend un hydrolysat d'époxysilane et une charge colloïdale, telle que de la silice colloïdale, TiO₂ ou Sb₂O₅ et un catalyseur, de préférence un chélate d'aluminium, tel que l'acétylacétonate d'aluminium, le reste étant essentiellement constitué par des solvants classiquement utilisés pour la formulation de telles compositions.

Le revêtement dur anti-abrasion présente généralement une épaisseur de 2 à 10 micromètres, préférentiellement de 3 à 6 micromètres.

On peut également déposer, si nécessaire, une couche anti-reflets sur la ou les couche(s) de revêtement dur anti-abrasion.

A titre d'exemple, le revêtement anti-reflets peut être constitué d'un film mono ou multi couche de matériaux diélectriques tels que SiO, SiO₂, Si₃N₄, TiO₂, ZrO₂, Al₂O3, MgF₂, Ta₂O₅, ou leurs mélanges.

Il devient ainsi possible d'empêcher l'apparition d'une réflexion à l'interface lentille/air.

Ce revêtement anti-reflets est appliqué généralement par dépôt sous vide selon l'une des techniques suivantes :
- par évaporation, éventuellement assistée par un faisceau ionique.
- par pulvérisation cathodique,
- par pulvérisation par faisceau d'ions,
- par dépôt chimique en phase vapeur, assisté par plasma.

Outre le dépôt sous vide, on peut aussi envisager un dépôt d'une couche minérale par voie sol/gel, par exemple à partir d'hydrolysats de tétraalcoxysilane.

Dans le cas où la pellicule comprend une seule couche, son épaisseur optique doit être égale à λ/4 où λ est une longueur d'onde comprise entre 450 et 650 nm .

Dans le cas d'un film multicouche comprenant 3 couches, on peut utiliser une combinaison correspondant à des épaisseurs optiques respectives λ/4-λ/2-λ/4 ou λ/4-λ/4-λ/4.

On peut en outre utiliser un film équivalent formé par plus de couches, à la place de l'une quelconque des couches précitées.

Si nécessaire, on peut intercaler un primaire d'adhérence entre le revêtement dur anti-abrasion et la face de la lentille ophtalmique composite sur laquelle on souhaite appliquer ledit revêtement.

Les primaires préférés sont des latex de polyuréthanne.

L'invention a également pour objet un procédé d'obtention d'une lentille ophtalmique composite comprenant les étapes suivantes :
- obtenir une préforme de lentille ayant une face avant constituant une surface optique avant S'3 et une face arrière, parallèle à la face avant, constituant une surface optique arrière S'2,
- constituer une cavité de moulage délimitée par la face avant de ladite préforme et un élément de moule présentant une face en regard de ladite préforme et constituant une surface optique S'1,
- remplir la cavité de moulage d'une composition polymérisable conduisant, par polymérisation, à un matériau d'indice supérieur ou égal à 1, 60,
- effectuer la polymérisation de ladite composition polymérisable,
- séparer ledit élément de moule de la lentille composite formée et récupérer ladite lentille.

Préférentiellement, la polymérisation de la composition polymérisable s'effectue par voie thermique.

L'utilisation d'une composition polymérisable d'indice de réfraction élevé permet d'employer une faible quantité de matière pour réaliser la couche formant la partie avant de la lentille.

Ainsi, les tensions dues au retrait lois de la polymérisation de cette couche seront minimisées et, en conséquence, les déformations éventuelles de la préforme également.

Il est donc possible d'utiliser des préformes d'épaisseurs très fines dans le procédé de l'invention.

La suite de la description se réfère aux figures annexées.

La figure 1 représente une vue en coupe d'une première lentille ophtalmique composite de puissance négative, selon l'invention,

La figure 2 représente une vue en coupe d'une deuxième lentille ophtalmique composite de puissance positive, selon l'invention,

La figure 3 représente une vue en coupe d'un moule lors de la fabrication d'une lentille composite selon l'invention.

Une lentille ophtalmique composite 1 à puissance négative selon l'invention comporte une première couche 2 formant la partie avant de ladite lentille 1, et constituée d'un matériau d'indice élevé et d'une deuxième couche 3 formant la partie arrière de la lentille 1.

Les deux couches adhèrent fermement l'une à l'autre au niveau de leur interface 5 qui constitue une surface optique S3 .

L'interface 5 constituant la surface optique S3 est parallèle à la face arrière 6 de la deuxième couche 3 constituant la surface optique arrière S2, de sorte que la deuxième couche 3 est un élément de lentille « plan ».

La face avant 4 de la lentille ophtalmique composite 1 constitue une surface optique avant sphérique S1 et la face arrière 6 une surface optique arrière sphérique S2 (6) de rayon de courbure plus court que celui de la surface optique avant S1, de telle sorte que la puissance résultante de la lentille 1 est négative.

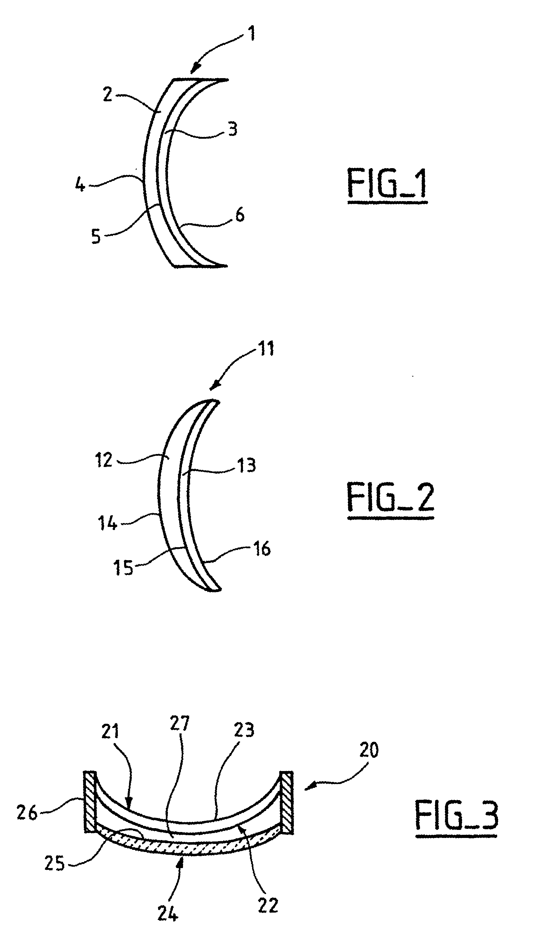

Le procédé d'obtention d'une telle lentille est représenté en figure 3.

On forme tout d'abord un moule 20 constitué :
- d'une préforme 21 ayant une face avant 22 constituant une surface optique avant S'3, identique à la surface optique S3 souhaitée pour l'interface 5 de la lentille 1, et une face arrière 23 parallèle à la face avant 22 et constituant une surface optique arrière S'2,
- d'une partie de moule 24, par exemple en verre minéral, dont la face interne 25 est complémentaire de la face avant 4 constituant la surface optique avant S1 de la lentille composite finale 1,
- un joint 26, maintenant en place la préforme 21 et la partie de moule en verre minéral 24.

On écarte le joint 26, de façon à introduire dans la cavité de moulage 27 une composition polymérisable conduisant, par polymérisation, à un polymère d'indice élevé.

On procède ensuite à la polymérisation, préférentiellement par voie thermique de la composition polymérisable.

Après séparation de la partie de moule 24, on obtient la lentille ophtalmique composite 1.

Une lentille ophtalmique composite à puissance positive 11 est représentée en figure 2. Elle comporte une première couche 12, formant la partie avant de ladite lentille 11, et constituée d'un matériau d'indice élevé et une deuxième couche 13 formant la partie arrière.

Les deux couches 12 et 13 adhèrent fermement l'une à l'autre au niveau de leur interface 15 constituant la surface optique S3.

L'interface 15 constituant la surface optique S3 et la face arrière 16 constituant la surface optique arrière S2 sont parallèles, de sorte que la deuxième couche 13 constitue un élément de lentille « plan ».

La face avant 14 de la lentille ophtalmique composite 11 constitue une surface optique avant sphérique S1 et la face arrière 16 une surface optique arrière sphérique S2 de rayon de courbure plus grand que celui de la surface optique avant S1, de telle sorte que la puissance résultante de la lentille 11 est positive .

Cette lentille 11 peut être obtenue comme décrit ci-dessus mais en utilisant une partie de moule de configuration appropriée.

L'invention est illustrée par les exemples ci-dessous :

### Exemple 1 :

### Réalisation d'une lentille ophtalmique composite de puissance négative (- 2,00 dioptries) à partir d'une préforme de polythiouréthanne constituant un élément de lentille "plan".

On utilise une préforme de polythiouréthanne (obtenue par polymérisation thermique, dans un moule en verre minéral, d'un mélange de pentaérythritol tetrakis (3- mercaptopropionate) et de xylylène diisocyanate dans un ratio massique 1,3/1) d'épaisseur 0,6 mm et de rayon de courbure 122,5 cm.

On forme, comme représenté en figure 3, un moule constitué d'une partie de moule en verre minéral présentant une surface optique de rayon de courbure 187,4 cm et de la préforme ci-dessus, l'ensemble étant maintenu par un ruban adhésif périphérique.

On introduit dans le moule ci-dessus une composition polymérisable à base d'épisulfures et renfermant une amine comme initiateur.

On soumet ensuite le moule à un cycle de polymérisation thermique sur une durée de 23 heures pendant laquelle la température varie de 30 à 100°C.

Après séparation de la partie de moule en verre minéral, on récupère la lentille composite de puissance -2,00 dioptries et d'une épaisseur au centre de 1,3 mm.

L'aspect optique du verre est visuellement excellent.

Le matériau de la couche constituant la partie avant de la lentille ophtalmique composite possède un indice de réfraction de 1,71.

La lentille composite passe avec succès le test FDA de résistance au choc (pas de rupture suite à une chute de bille de 100g d'une hauteur de 1,27 m)

Elle est colorable sur sa face arrière dans les bains de coloration classiques.

### Exemple 2

On réalise une lentille ophtalmique composite de puissance positive (+2,00 dioptries) en procédant de la même façon que dans l'exemple 1 ci-dessus, mais en utilisant une préforme constituant un élément de lentille "plan" en CR39® d'épaisseur 0,6 mm et présentant un rayon de courbure de 291 cm.

### Exemple 3

Cet exemple concerne la réalisation d'une lentille composite photochromique.

On réalise une préforme consistant en une lentille de puissance -6,00 dioptries, d'épaisseur au centre de 1,20 mm.

Cette préforme est réalisée par moulage entre deux parties de moule en verre minéral, d'une composition polymérisable à base de diépisulfure.

L'indice de réfraction de la préforme obtenue après démoulage est de 1,70.

La préforme est alors assemblée avec la partie de moule en verre minéral ayant servi à mouler la face arrière de cette préforme, l'assemblage définissant une cavité de moulage équiépaisse de 0,5 mm, entre la face arrière de la préforme et la surface optique de la partie de moule.

L'assemblage est maintenu par un ruban adhésif, disposé sur la tranche du moule, le ruban adhésif assurant l'étanchéité.

On introduit dans la cavité de moulage ci-dessus, un monomère essentiellement constitué de diméthacrylate de diéthoxy bisphénol-A et de polyéthylèneglycol diméthacrylate, monomère dans lequel on a ajouté 0, 16 % en poids d'un composé photochromique de type naphtopyrane, puis on polymérise par UV.

Après démoulage, on obtient une lentille ophtalmique composite photochromique d'une épaisseur totale de 1,7 mm et de puissance optique - 6,00 dioptries.

## Revendications

1. Lentille ophtalmique composite (1) comprenant une première et une deuxième couches adjacentes définissant entre elles une interface (5,15), **caractérisée en ce que** :
- la première couche (2,12), d'une épaisseur d'au moins 200 micromètres, en un premier matériau polymère d'indice de réfraction supérieur ou égal à 1,60, forme une partie avant de ladite lentille et a une face avant (4,14) constituant une surface optique avant S1,
- la deuxième couche (3,13), d'une épaisseur d'au moins 200 micromètres, en un second matériau polymère forme une partie arrière de ladite lentille et a une face arrière (6,16) constituant une surface optique arrière S2, et
l'interface (5,15) entre ces deux couches constitue une surface optique S3 et est parallèle à la face arrière (6,16) de la deuxième couche (3,13).

2. Lentille ophtalmique selon la revendication 1, **caractérisée en ce que** le deuxième matériau formant la deuxième couche (2, 12) a un indice de réfraction inférieur au premier matériau formant la première couche, l'écart entre les indices de réfraction du second et du premier matériau étant d'au moins 0,05 et mieux d'au moins 0,10.

3. Lentille ophtalmique selon la revendication 1 ou 2, **caractérisée en ce que** la surface optique avant S 1 est une surface optique multifocale.

4. Lentille ophtalmique selon la revendication 1 ou 2, **caractérisée en ce que** la surface optique avant S1 est une surface optique progressive.

5. Lentille ophtalmique selon l'une quelconque des revendications précédentes, **caractérisée en ce que** la surface optique arrière S2 est une surface optique sphérique.

6. Lentille ophtalmique selon l'une quelconque des revendications 1 à 4, **caractérisée en ce que** la surface optique arrière S2 est une surface optique torique.

7. Lentille ophtalmique selon l'une quelconque des revendications précédentes, **caractérisée en ce que** l'épaisseur de la première couche (2,12) formant la partie avant de la lentille possède une épaisseur au centre de 0,2 à 10 mm.

8. Lentille ophtalmique selon l'une quelconque des revendications précédentes, **caractérisée en ce que** la deuxième couche (3,13) formant la partie arrière de la lentille possède une épaisseur au centre de 0,2 à 1 mm.

9. Lentille ophtalmique selon l'une quelconque des revendications précédentes, **caractérisée en ce que** l'indice de réfraction du premier matériau polymère est supérieur ou égal à 1,65, de préférence supérieur à 1,67 et mieux égal ou supérieur à 1,7.

10. Lentille ophtalmique selon l'une quelconque des revendications précédentes, **caractérisée en ce que** le premier matériau polymère est un matériau renfermant du soufre tel que des polythiouréthannes, des polymères d'épisulfures.

11. Lentille ophtalmique selon l'une quelconque des revendications précédentes, **caractérisée en ce que** le second matériau polymère est choisi parmi les poly(allyl carbonates), les polyuréthannes, les polythiouréthannes, les polycarbonates.

12. Lentille ophtalmique selon l'une quelconque des revendications précédentes, **caractérisée en ce qu'**elle comporte un revêtement anti-abrasion déposé sur l'une au moins des faces avant (4,14) et arrière (6,16) constituant, respectivement, les surfaces optiques avant S1 ou arrière S2.

13. Lentille ophtalmique selon la revendication 12, **caractérisée en ce qu'**un revêtement antireflet est déposé sur le revêtement anti-abrasion.

14. Lentille ophtalmique selon la revendication 12 ou 13, **caractérisée en ce que**'lle comporte un primaire d'adhérence entre l'une au moins des faces avant (4,14) ou arrière (6,16) constituant, respectivement, les surfaces optiques avant S1 et arrière S2 et le revêtement anti-abrasion.

15. Lentille ophtalmique selon l'une quelconque des revendications précédentes, **caractérisée en ce que** la deuxième couche (3,13) formant la partie arrière de la lentille est une préforme, sur la face avant de laquelle la première couche (2,12) du premier matériau polymère a été durcie.

16. Procédé d'obtention d'une lentille ophtalmique selon la revendication 15 comprenant les étapes suivantes :
- obtenir une préforme (21) de lentille ayant une face avant (22) constituant une surface optique avant S'3 et une face arrière (23), parallèle à la face avant, constituant une surface optique arrière S'2,
- constituer une cavité de moulage délimitée par la face avant (22) de ladite préforme et un élément de moule (24) ayant une face (25)constituant une surface optique S'1 faisant face à ladite préforme (21),
- remplir la cavité de moulage d'une composition polymérisable conduisant, par polymérisation, à un matériau d'indice supérieur ou égal à 1,6,
- effectuer la polymérisation de ladite composition polymérisable,
- séparer ladite partie de moule (24) de la lentille composite formée et récupérer cette dite lentille.

17. Procédé selon la revendication 16, **caractérisé en ce que** la surface optique S'1 est une surface optique multifocale ou progressive.

18. Procédé selon la revendication 16 ou 17, **caractérisé en ce que** la surface optique S'2 est une surface optique sphérique ou torique.

19. Procédé selon l'une quelconque des revendications 16 à 18, **caractérisé en ce que** la préforme (21) a une épaisseur au centre de 0,2 à 1 mm.

20. Procédé selon l'une quelconque des revendications 16 à 19, **caractérisé en ce que** la composition polymérisable conduit, par polymérisation, à un matériau d'indice de réfraction supérieur ou égal à 1,65, de préférence supérieur à 1,67, et mieux égal ou supérieur à 1,7.

## Claims

1. Composite ophthalmic lens (1) comprising a first and a second adjacent layer defining between them an interface (5, 15)
**characterized in that**:
- the first layer (2, 12), at least 200 micrometers thick, of a first polymeric material of refractive index higher than or equal to 1.60 forms a front part of said lens and has a front face (4, 14) making a front optical surface S1,
- the second layer (3, 13), at least 200 micrometers thick, of a second polymeric material forms a rear part of said lens and has a rear face (6, 16) making a rear optical surface S2, and
- the interface (5, 15) between these two layers provides an optical surface S3 and is parallel to the rear face (6, 16) of the second layer (3, 13).

2. Ophthalmic lens according to Claim 1, **characterized in that** the second material forming the second layer (2, 12) has a refractive index lower than the first material forming the first layer, the difference between the refractive indices of the first and second materials being at least 0.05, and preferably at least 0.10.

3. Ophthalmic lens according to Claim 1 or 2, **characterized in that** the front optical surface S1 is a multifocal optical surface.

4. Ophthalmic lens according to Claim 1 or 2, **characterized in that** the front optical surface S1 is a progressive optical surface.

5. Ophthalmic lens according to any one of the preceding Claims, **characterized in that** the rear optical surface S2 is a spherical optical surface.

6. Ophthalmic lens according to any one of Claims 1 to 4, **characterized in that** the rear optical surface S2 is a toric optical surface.

7. Ophthalmic lens according to any one of the preceding Claims, **characterized in that** the thickness of the first layer (2, 12) forming the front part of the lens has a thickness at the centre of 0.2 to 10 mm.

8. Ophthalmic lens according to any one of the preceding Claims, **characterized in that** the second layer (3, 13) forming the rear part of the lens has a thickness at the centre of 0.2 to 1 mm.

9. Ophthalmic lens according to any one of the preceding Claims, **characterized in that** the refractive index of the first polymeric material is higher than or equal to 1.65, preferably higher than 1.67 and, more preferably, equal to or higher than 1.7.

10. Ophthalmic lens according to any one of the preceding Claims, **characterized in that** the first polymeric material is a material containing sulphur, such as polythiourethanes and episulfide polymers.

11. Ophthalmic lens according to any one of the preceding Claims, **characterized in that** the second polymeric material is selected from the poly (allyl carbonates), the polyurethanes, the polythiourethanes, the polycarbonates.

12. Ophthalmic lens according to any one of the preceding Claims, **characterized in that** it comprises an anti-abrasion coating deposited on at least one of the front (4, 14) and rear (6, 16) faces constituting, respectively, the front S1 and rear S2 optical surfaces.

13. Ophthalmic lens according to Claim 12, **characterized in that** an anti-dazzle coating is deposited on the anti-abrasion coating.

14. Ophthalmic lens according to Claim 12 or 13, **characterized in that** it comprises a primary adhesive between at least one of the front (4, 14) or rear (6, 16) faces constituting, respectively, the front S1 and rear S2 optical surfaces and the anti-abrasion coating.

15. Ophthalmic lens according to any one of the preceding Claims, **characterized in that** the second layer (3, 13) forming the rear part of the lens is a preform, on the front face of which the first layer (2, 12) of the first polymeric material has been cured.

16. Method for obtaining an ophthalmic lens according to Claim 15 comprising the following steps:
- provide a lens preform (21) having a front face (22) forming a front optical surface S'3 and a rear face (23), parallel to the front face, forming a rear optical surface S'2,
- form a moulding cavity delimited by the front face (22) of said preform and a mould element (24) having a face (25) constituting an optical surface S'1 opposite said preform (21),
- fill the moulding cavity with a polymerisable composition leading, by polymerisation, to a material with a refractive index higher than or equal to 1.6,
- carry out the polymerisation of said polymerisable composition,
- separate said mould part (24) from the composite lens formed and recover this said lens.

17. Method according to Claim 16, **characterized in that** the optical surface S'1 is a progressive or multifocal optical surface.

18. Method according to Claim 16 or 17, **characterized in that** the optical surface S'2 is a toric or spherical optical surface.

19. Method according to any one of Claims 16 to 18, **characterized in that** the preform (21) has a thickness at the centre of 0.2 to 1 mm.

20. Method according to any one of Claims 16 to 19, **characterized in that** the polymerisable composition leads, by polymerisation, to a material with a refractive index higher than or equal to 1.65, preferably higher than 1.67 and, more preferably, equal to or higher than 1.7.

## Patentansprüche

1. Ophthalmischer Linsenverbund (1), umfassend eine erste und eine zweite benachbarte Schicht, die zwischen sich eine Zwischenschicht (5,15) definieren, **dadurch gekennzeichnet, dass**:
- die erste Schicht (2,12) von einer Dicke von mindestens 200 Mikrometern aus einem ersten Polymermaterial mit einem Brechungsindex größer oder gleich 1,60 einen vorderen Teil der genannten Linse bildet und eine Vorderseite (4,14) aufweist, die eine vordere optische Fläche S 1 bildet,
- die zweite Schicht (3,13) von einer Dicke von mindestens 200 Mikrometern aus einem zweiten Polymermaterial einen hinteren Teil der genannten Linse bildet und eine Rückseite (6,16) aufweist, die eine hintere optischen Fläche S2 bildet, und die Zwischenschicht (5,15) zwischen diesen beiden Schichten eine optische Fläche S3 bildet und parallel zur Rückseite (6,16) der zweiten Schicht (3,13) ist.

2. Ophthalmische Linse gemäß Anspruch 1, **dadurch gekennzeichnet, dass** das zweite Material, welches die zweite Schicht (2,12) bildet, einen geringeren Brechungsindex als das erste Material hat, welches die erste Schicht bildet, wobei der Unterschied zwischen den Brechungsindizes des zweiten und ersten Materials mindestens 0,05 und bevorzugt mindestens 0,10 beträgt.

3. Ophthalmische Linse gemäß Anspruch 1 oder 2, **dadurch gekennzeichnet, dass** die vordere optische Fläche S1 eine multifokale optische Fläche ist.

4. Ophthalmische Linse gemäß Anspruch 1 oder 2, **dadurch gekennzeichnet, dass** die vordere optische Fläche S 1 eine progressive optische Fläche ist.

5. Ophthalmische Linse gemäß einem der vorhergehenden Ansprüche, **dadurch gekennzeichnet, dass** die hintere optische Fläche S2 eine sphärische optische Fläche ist.

6. Ophthalmische Linse gemäß einem der Ansprüche 1 bis 4, **dadurch gekennzeichnet, dass** die hintere optische Fläche S2 eine torische optische Fläche ist.

7. Ophthalmische Linse gemäß einem der vorhergehenden Ansprüche, **dadurch gekennzeichnet, dass** die Dicke der ersten Schicht (2,12), welche den vorderen Teil der Linse bildet, in der Mitte eine Dicke von 0,2 bis 10 mm aufweist.

8. Ophthalmische Linse gemäß einem der vorhergehenden Ansprüche, **dadurch gekennzeichnet, dass** die Dicke der zweiten Schicht (3,13), welche den hinteren Teil der Linse bildet, in der Mitte eine Dicke von 0,2 bis 1 mm aufweist.

9. Ophthalmische Linse gemäß einem der vorhergehenden Ansprüche, **dadurch gekennzeichnet, dass** der Brechungsindex des ersten Polymermaterials größer oder gleich 1,65, vorzugsweise größer als 1,67 und mehr bevorzugt gleich oder größer 1,7 ist.

10. Ophthalmische Linse gemäß einem der vorhergehenden Ansprüche, **dadurch gekennzeichnet, dass** das erste Polymermaterial ein Material ist, welches Schwefel umfasst, wie Polythiourethane, Episulfidpolymere.

11. Ophthalmische Linse gemäß einem der vorhergehenden Ansprüche, **dadurch gekennzeichnet, dass** das zweite Polymermaterial ausgewählt wird aus den Poly(allylcarbonaten), den Polyurethanen, den Polythiourethanen, den Polycarbonaten.

12. Ophthalmische Linse gemäß einem der vorhergehenden Ansprüche, **dadurch gekennzeichnet, dass** sie eine antiabrasive Beschichtung umfasst, die mindestens auf einer der Vorder- (4,14) und Rückseiten (6,16) aufgebracht ist, die jeweils die optischen vorderen S 1 oder hinteren Flächen S2 bilden.

13. Ophthalmische Linse gemäß Anspruch 12, **dadurch gekennzeichnet, dass** eine Entspiegelungsbeschichtung auf der antiabrasiven Beschichtung aufgebracht ist.

14. Ophthalmische Linse gemäß Anspruch 12 oder 13, **dadurch gekennzeichnet, dass** sie eine Haftungsgrundierung zwischen mindestens einer der Vorder- (4,14) oder Rückseiten (6,16), die jeweils die optischen vorderen S1 und hinteren Flächen S2 bilden, und der antiabrasiven Beschichtung umfasst.

15. Ophthalmische Linse gemäß einem der vorhergehenden Ansprüche, **dadurch gekennzeichnet, dass** die zweite Schicht (3,13), welche den hinteren Teil der Linse bildet, eine Vorform ist, auf deren Vorderseite die erste Schicht (2,12) des ersten Polymermaterials gehärtet worden ist.

16. Verfahren zum Erhalt einer ophthalmischen Linse gemäß des Anspruchs 15, umfassend die folgenden Schritte:
- Erhalten einer Vorform (21) der Linse mit einer vorderen Seite (22), welche eine optische vordere Fläche S'3 bildet, und einer hinteren Seite (23), die zur vorderen Seite parallel ist, welche eine hintere optische Fläche S'2 bildet,
- Bildung einer Vertiefung zum Formpressen, welche durch die vordere Seite (22) der genannten Vorform und ein Formelement (24) mit einer Seite (25) begrenzt wird, welche eine optische Fläche S'1 bildet, welche der vorgenannten Vorform (21) gegenüber steht,
- Füllen der Vertiefung zum Formpressen mit einer polymerisierbaren Zusammensetzung, was durch Polymerisieren zu einem Material mit einem Brechungsindex von größer oder gleich 1,6 führt,
- Ausführen der Polymerisation der genannten polymerisierbaren Zusammensetzung,
- Trennen des Formabschnitts (24) von der gebildeten Linsenzusammensetzung und Gewinnung dieser Linse.

17. Verfahren gemäß Anspruch 16, **dadurch gekennzeichnet, dass** die optische Fläche S'1 eine multifokale oder progressive optische Fläche ist.

18. Verfahren gemäß Anspruch 16 oder 17, **dadurch gekennzeichnet, dass** die optische Fläche S'2 eine sphärische oder torische optische Fläche ist.

19. Verfahren gemäß einem der Ansprüche 16 bis 18, **dadurch gekennzeichnet, dass** die Vorform (21) in der Mitte eine Dicke von 0,2 bis 1 mm aufweist.

20. Verfahren gemäß einem der Ansprüche 16 bis 19, **dadurch gekennzeichnet, dass** die polymerisierbare Zusammensetzung durch Polymerisation zu einem Material mit einem Brechungsindex führt, der größer oder gleich 1,65, vorzugsweise größer als 1,67 und mehr bevorzugt gleich oder größer 1,7 ist.
